# EUROPEAN PATENT SPECIFICATION

(11) **EP 3 280 875 B1**
(45) Date of publication and mention of the grant of the patent: **11.03.2020**
(21) Application number: 16718119.7
(22) Date of filing: 08.04.2016
(51) Int. Cl.: E21B 47/12, E21B 47/10, G01F 1/66

(54) **FLOW MONITORING TOOL**
INSTRUMENT ZUR STRÖMUNGSÜBERWACHUNG
OUTIL DE SURVEILLANCE D'ÉCOULEMENT

(30) Priority: 09.04.2015 US 201562145211 P
(43) Date of publication of application: 14.02.2018
(73) Proprietor: Saudi Arabian Oil Company, 31311 Dhahran (SA)
(72) Inventor: AL-KHALIFA, Mohammed, Dhahran 31311 (SA); XIAO, Jinjiang, Dharan 31311 (SA)
(74) Representative: Dauncey, Mark Peter
(86) International application number: PCT/US2016/026788
(87) International publication number: WO 2016/164826

(56) References cited:
- EP-A1- 0 418 224
- WO-A1-2015/026324
- US-A1- 2010 107 754
- US-A1- 2015 021 009
- US-B1- 6 341 652

## Description

### BACKGROUND OF THE DISCLOSURE

### 1. Field of the Disclosure

The present technology relates to oil and gas production. In particular, the present technology relates to measuring flow and other properties of fluid in a well.

### 2. Description of the Related Art

Measurement of fluid properties in a well can be useful to optimize production of oil and gas, as well as the injection of chemicals and other fluids into the well. Internal control valves (ICV) and inflow control devices (ICD) can be adjusted in response to such fluid properties to optimize production from the well. Similarly, measurement of flow rate in the production tubing of a well helps to determine whether a submersible pump or other equipment is functioning properly. Measurement of parameters such as pressure and temperature can also be useful to help control equipment based on real time conditions in the well. A transducer device operating with ultrasound for the measurement of the flow velocity of a fluid in a pipe is described in EP 0 418 224. The device comprises two transducers mounted on their respective sides of the pipe and directed obliquely in relation to the direction of the flow. The transducers alternatively transmit and receive sonic pulses to and from each other respectively.

Some known systems utilize venturi meters to measure flow in a well, and separate electronic sensors to measure parameters such as pressure and temperature. Use of a venturi meter and multiple sensors, however, can be problematic because such a system has multiple components, leading to increased possibility of failure of a component, which can lead to costly downtime to repair or replace components.

Other systems utilize passive acoustic sensing technology to "listen" to the fluid in a well to determine parameters like flow rate, pressure, and temperature. Such systems have limitations, however, in particular with regard to the ability to monitor silent flow (that is, flow that does not generate audible signals, such as through turbulence).

### SUMMARY OF THE DISCLOSURE

Systems and method described in this disclosure provide a downhole flow sensing tool using two fiber optic cables for discrete audible or ultrasound generation and either distributed or discrete sensing. A first cable is used for generation and the second cable is used for sensing. The amount of signal generated is controlled and known, allowing precise comparison between the generated signal and the sensed signal. The comparison between generated and sensed signal will allow a more accurate measurement of flow parameters. By utilizing the active generation of audible or ultrasound signals, there are higher probabilities of flow detection even for silent flow. The two fiber optic cables are installed besides the tubing as it is being installed so there are no obstructions preventing wellbore access. Embodiments of this disclosure can be used for assessing well and artificial lift system performance.

In an embodiment of this disclosure, a system for measuring conditions in a wellbore includes tubing extending into the wellbore. A first fiber optic cable extends axially along a first surface portion of the tubing and has multiple signal generation gauges, each located at a predetermined location along the first fiber optic cable for producing a generated acoustic signal by tapping out a light of a predetermined wavelength of the first fiber optic cable, said acoustic signal propagating outward from the generation gauge and through the tubing. A second fiber optic cable extends axially along a second surface portion of the tubing and is operable to receive a resulting signal of the generated acoustic signal so that wellbore parameters proximate to the predetermined location can be determined. The second fiber optic cable is spaced apart from the first fiber optic cable and is operable to transmit data of the resulting signal to a receiver.

In alternate embodiments, the first fiber optic cable and the second fiber optic cable can extend substantially parallel to one another and the second surface portion of the tubing can be on an opposite side of the tubing from the first surface portion of the tubing. The generated acoustic signal can have a frequency of between about 1mHz and about 100 kHz, and a dynamic range of about 120dB or more. A penetrator can circumscribe the first fiber optic cable and be located within an annular packer between the tubing and the wellbore, the penetrator sealing between the first fiber optic cable and the annular packer.

In other alternate embodiments, the second fiber optic cable can have at least one signal detection point located at a discrete location along the second fiber optic cable or alternately, can be operable to receive the generated acoustic signal along a distributed length of the second fiber optic cable. The second fiber optic cable can be operable to receive an amplitude and a phase of the resulting signal. The wellbore parameters can be selected from a group consisting of pressure, temperature, phase fraction, and fluid flow rate.

In an alternate embodiment of this disclosure, a system for measuring conditions in a wellbore includes tubing extending into the wellbore. A first fiber optic cable extending axially along a the tubing and having multiple signal generation gauges for generating a generated acoustic signal by tapping out a light of a predetermine wavelength of the first fiber optic cable, said generated acoustic signal propagating outward from each of the signal generation gauges. Each signal generation gauge located at a predetermined location along the first fiber optic cable. A second fiber optic cable can extend axially along an opposite side of the tubing from the first fiber optic cable and operable to receive a resulting signal of the generated acoustic signal after the generated acoustic signal passes through the tubing, wherein the first fiber optic cable and the second fiber optic cable are separate fiber optic cables and are spaced apart from each other. A receiver is in communication with the second fiber optic cable and is operable to receive data of the resulting signal, the data including at least one of an amplitude and a phase of the resulting signal.

In alternate embodiments, the receiver can be operable to determine at least one of a pressure, temperature, phase fraction, and fluid flow rate within the wellbore from the data of the resulting signal. The first fiber optic cable and the second fiber optic cable can be secured to a surface of the tubing. The second fiber optic cable can have a distributed length and be operable to receive the resulting signal along the distributed length.

In yet another alternate embodiment of this disclosure, a method for measuring conditions in a wellbore includes extending tubing into the wellbore, the tubing having a first fiber optic cable extending axially along a fist surface portion of the tubing and a second fiber optic cable extending axially along a second surface portion of the tubing, the second fiber optic cable being a separate cable spaced apart from the first fiber optic cable. A generated acoustic signal is generated with multiple signal generation gauges that produce a generated acoustic singal by tapping out a light of a predetermined wavelength of the first fiber optic cable, each of the multiple signal generation gauges located at a predetermined location along the first fiber optic cable, the generated acoustic signal propagating outward from the at least one signal generation gauge and through the tubing. A resulting signal of the generated acoustic signal is received with the second fiber optic cable so that wellbore parameters proximate to the predetermined location can be determined. Data of the resulting signal is transmitted to a receiver with the second fiber optic cable.

In alternate embodiments, generating the generated acoustic signal can include generating the generated acoustic signal with a frequency of between about 1mHz and about 100 kHz, and a dynamic range of about 120dB or more. The second fiber optic cable can have at least one signal detection point located at a discrete location along the second fiber optic cable and receiving the resulting signal with the second fiber optic cable can include receiving the resulting signal with the at least one signal detection point. Alternately, receiving resulting signal with the second fiber optic cable can include receiving the resulting signal along a distributed length of the second fiber optic cable. Transmitting the data of the resulting signal to the receiver with the second fiber optic cable the second fiber optic cable can include transmitting an amplitude and a phase of the resulting signal. At least one of a pressure, temperature, phase fraction, and fluid flow rate within the wellbore can be determined from the data of the resulting signal.

### BRIEF DESCRIPTION OF THE DRAWINGS

The present technology will be better understood on reading the following detailed description of nonlimiting embodiments thereof, and on examining the accompanying drawings, in which:
Figure 1 is a side cross-sectional view of a wellbore, including a flow monitoring tool according to an embodiment of the present technology; and
Figure 2 is an alternate view of the system of Figure 1, and further showing signals generated and received by the present technology.

### DETAILED DESCRIPTION OF THE DISCLOSURE

The foregoing aspects, features, and advantages of the present technology will be further appreciated when considered with reference to the following description of embodiments of this disclosure and accompanying drawings. In describing the embodiments of the technology illustrated in the appended drawings, specific terminology will be used for the sake of clarity. However, the embodiments are not intended to be limited to the specific terms used, and it is to be understood that each specific term includes equivalents that operate in a similar manner to accomplish a similar purpose. In interpreting this disclosure, all terms should be interpreted in the broadest possible manner consistent within the context of each term. All technical and scientific terms used in this disclosure have the same meaning as commonly understood by one of ordinary skill in the art to which the invention belongs unless defined otherwise.

As used in this disclosure, the singular forms "a", "an" and "the" include plural references unless the context clearly indicates otherwise. The verb "comprises" and its conjugated forms should be interpreted as referring to elements, components or steps in a non-exclusive manner, and the invention illustrative disclosed suitably may be practiced in the absence of any element which is not specifically disclosed, including as "consisting essentially of' and "consisting of. The referenced elements, components or steps may be present, utilized or combined with other elements, components or steps not expressly referenced. "Operable" and its various forms means fit for its proper functioning and able to be used for its intended use. "Associated" and its various forms means something connected with something else because they occur together or that one produces the other. "Detect" and its conjugated forms should be interpreted to mean the identification of the presence or existence of a characteristic or property. "Determine" and its conjugated forms should be interpreted to mean the ascertainment or establishment through analysis or calculation of a characteristic or property. "Fluids" means vapors, liquids, gases and their combinations at their present condition unless otherwise stated.

Spatial terms describe the relative position of an object or a group of objects relative to another object or group of objects. The spatial relationships apply along vertical and horizontal axes. Orientation and relational words are for descriptive convenience and are not limiting unless otherwise indicated.

Where this disclosure provides a range of values, it is understood that the interval encompasses each intervening value between the first limit and the second limit as well as the first limit and the second limit. Embodiments of this disclosure include smaller ranges of the interval subject to any specific exclusion provided. "Substantial" and its derivatives means equal to or greater than 10% by the indicated unit of measure. Where this disclosure references a method comprising two or more defined steps, the defined steps can be carried out in any order or simultaneously except where the context excludes that possibility.

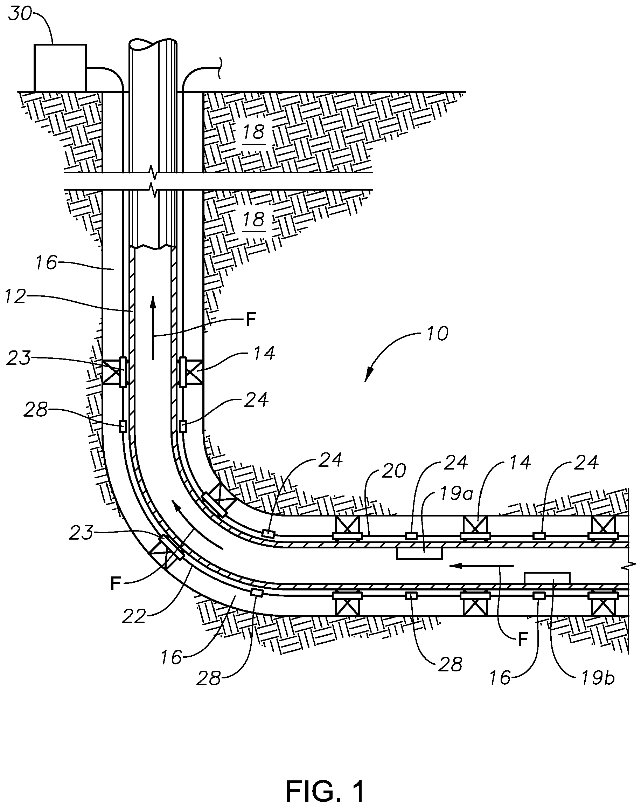

Figure 1 is a side schematic view of a portion of a wellbore 10 having a tubing such as tubing string 12 running therethrough. At select intervals in the wellbore 10, packers 14 can surround the tubing string 12. One function of the packers 14 is to seal portions of the annulus 16 one from another, such as to contain wellbore fluid in one portion of the annulus 16 from moving to another portion of the annulus 16 separated by the packer 14. Within the annulus 16, fluid is free to flow as long as it is not impeded by a packer 14. Furthermore, in non-cased portions of the well, or portions of the well having a porous casing, such as a perforated casing, fluid can flow into the annulus from the formation 18.

During production of the well, the production fluid flows toward the top of the well through the tubing string 12, as indicated by arrows F. In some wells, the pressure may be sufficiently high that the production fluid flows toward the top of the well without assistance. In many wells, however, artificial lift techniques are used to lift the production fluid to the top of the well. Such techniques may include, for example, pumping the production fluid up the tubing string 12 using submersible pumps (not shown).

In addition, internal control valves (ICV) 19a and inflow control devices (ICD) 19b can be used in the well to enable optimization of the production and inflow rates of fluids in the wellbore. ICVs 19a are valves placed in predetermined locations in the well, and that regulate the hydrocarbon formation flow at such locations. They can be partially opened or closed to control the amount of hydrocarbon product produced from the formation. For example, they can be open at 100%, 75%, or less, and the amount that they are opened can typically be controlled from the surface. ICDs 19b, on the other hand, are typically more passive control devices, where only one pre-determined position can be achieved (that is, they cannot be partially opened and closed like the ICVs 19a). In practice, ICDs 19b are typically used where a formation has different permeability in different parts of the formation, so that one part of the formation is more productive than another part in the same well. ICDs 19b can be used to regulate the flow in one part of the well vis-à-vis another to provide a more uniform flow between the parts. Such uniform flow can be beneficial to prevent problems such as water encroaching into a well through a highly permeable section, thereby decreasing recovery.

Accordingly, the ICVs 19a can help to increase hydrocarbon recovery and prevent unwanted fluid production. The ICDs 19b can be positioned to optimize the water flood profile. Although the operations of such devices as ICVs 19a and ICDs 19b is well understood, the optimization of the devices in-situ is complex, and relies in part on accurate information about flow and other parameters. In fact, the real-time monitoring of fluid flow along the wellbore can provide valuable information to set the position of the inflow devices and optimize the fluid flow in multilateral zones.

Accordingly, it can be advantageous to monitor certain parameters of the production fluid as it flows through the tubing string 12. Such parameters can include, for example, the phase fraction, pressure, temperature, or flow rate of the production fluid. Knowledge of these parameters can lead to adjustment of equipment, such as a submersible pump, ICVs, or ICDs as necessary to optimize production and avoid unsafe conditions in the well.

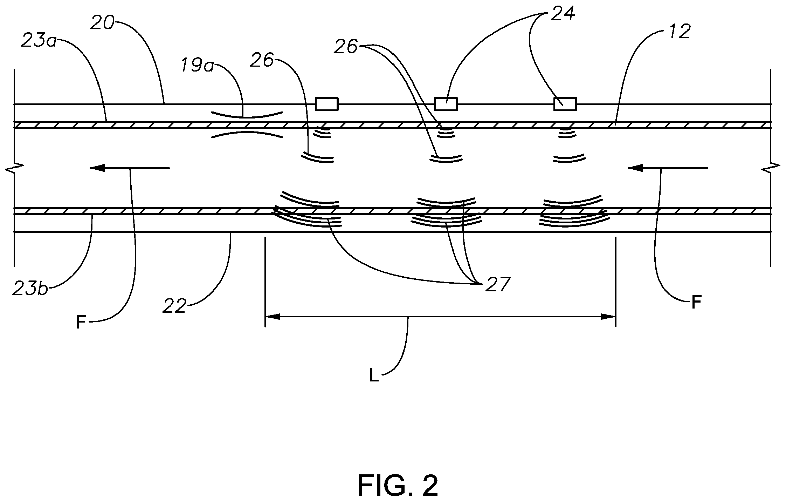

To this end, the present technology includes the use of a first fiber optic cable 20 and a second fiber optic cable 22 to monitor well conditions as described in this application. First fiber optic cable 20 extends axially along a first surface portion 23a of tubing 12 and second fiber optic cable 22 can extend axially along a second surface portion 23b of tubing 12. First fiber optic cable 20 and second fiber optic cable 22 can be secured to a surface of tubing string 12. First fiber optic cable 20 and second fiber optic cable 22 can extend substantially parallel to one another. The second surface portion 23b of tubing 12 can be on an opposite side of the tubing 12 from the first surface portion 23a of tubing 12 so that first fiber optic cable 20 and second fiber optic cable 22 are on opposite sides of tubing 12. In the example of Figure 2, first surface portion 23a and second surface portion 23b are both an exterior surface of tubing 12. In alternate embodiments, first surface portion 23a and second surface portion 23b can be inner diameter surfaces of tubing 12, or first surface portion 23a and second surface portion 23b can be surfaces of bores that extend through the sidewall of tubing 12.

First fiber optic cable 20 and second fiber optic cable 22 are separate fiber optic cables and can be spaced apart from each other so that they are not in contact with each other. Fiber optic cables 20, 22 can be protected across couplings of the tubing string over the length of the tubing to prevent potential damage during run in hole (RIH) operations. In order to pass through packer 14 or other members within annulus 16, first fiber optic cable 20 and second fiber optic cable 22 can include penetrator 23. Penetrator 23 can help the fiber optic cables 20, 22 pass through such objects. Penetrator 23 can circumscribe first fiber optic cable 20 or second fiber optic cable 22 and be located within packer 14, sealing between the fiber optic cable 20, 22 and packer 14. Alternately, fiber optic cables 20, 22 can be encased inside metal tubes that are attached and secured to the tubing string from the outside.

First fiber optic cable 20 includes multiple signal generating gauge 24 for producing generated acoustic signals 26, or pulses (shown in Figure 2). The signals are acoustic signals, and can be either ultrasound or audible. In embodiments according to the present invention, generated acoustic signals 26 are generated at multiple predetermined locations along the first fiber optic cable 20. Generated acoustic signals 26 propagate outward from signal generation gauges 24 and through tubing 12. The signals are generated based on a predetermined light tapping pattern that only taps out the light of a particular predetermined wavelength for laser ultrasound generation. Longer wavelengths can provide the advantage of passing through wellbore fluids and other components without a loss or with very minimal loss. As an example, generated acoustic signals 26 can generate signals having a wide frequency, such as a frequency of about 1mHz to about 100 kHz, and a high dynamic range, such as a range of about 120 dB or greater.

The second fiber optic cable 22 can receive or intercept the resulting signals 27 of the generated acoustic signals 26 emitted by the signal generating gauges 24 of the first fiber optic cable 20. Resulting signals 27 are signals that originated as generated acoustic signals 26 then traveled through tubing 12 and fluids and any other materials within tubing 12, before reaching second fiber optic cable 22. Fiber optic cable can receive, for example, features of resulting signals 27 such as amplitude and phase of resulting signals 27. Because the features of generated acoustic signal 26 are controlled and known, by comparing the features of generated acoustic signal 26 and resulting signals 27 can allow for accurate determination of parameters such as of pressure, temperature, phase fraction, or fluid flow rate of the fluids within tubing 12.

Looking at the embodiment of Figure 2, second fiber optic cable 22 can receive resulting signals 27 along a distributed length L of second fiber optic cable 22. Having distributed length L of second fiber optic cable 22 allows for an analyses to be performed with information collected from resulting signals 27 over the entire distributed length L of second fiber optic cable 22 to capture a more accurate acoustic picture of the flow through tubing 12

In the alternate embodiment of Figure 1, second fiber optic cable 22 can have at least one signal detection point 28 located at a discrete location along second fiber optic cable 22. Signal detection points 28 can then employ digital optoelectronics detection techniques to capture the resulting signals 27, and then second fiber optic cable 22 can transmit data about the signal to receiver 30. In such an embodiments, fluid parameters proximate to the locations of signal detection points 28 can be discretely collected and analyzed.

The present disclosure therefore contemplates the use of both discrete and distributed detection of resulting signals 27, as determined by the needs and circumstances related to operation of a particular well. Discrete detection signals can be more practical and easier to implement, as they involve sensors at only predetermined discrete places in the well bore. In certain embodiments, discrete sensing can be achieved through the use of fiber Bragg grating (FBG) sensors. Distributed sensing, on the other hand, can be more comprehensive, giving a broader profile of the flow along the entire wellbore because it is not limited to discrete points. Instead, distributed sensing is achieved through the cable itself and isn't controlled or limited. The flow conditions in the well can affect glass fibers in the well, and locally change the characteristics of light transmission in the fiber. As a result of the damping of the light in the quartz glass fibers through scattering, the location of an external physical effect can be determined so that the optical fiber can be employed as a linear sensor.

In practice, the first and second fiber optic cables 20, 22 can be installed beside the tubing string 12 as the tubing is installed. Fiber optic cables 20, 22 can be, for example, secured to an outside of tubing 12. Thus, at the time the cables are installed, there is no obstruction preventing wellbore access.

One example of how the embodiments of this disclosure can help to overcome shortcomings of the previously known technologies is the problems faced in existing wells with venturi meters. In some wells, flow control devices are used to control the flow from different compartments in the well having different productivity. Such flow control devices typically include flow monitoring through a venturi meter and electronic sensors, and flow control through electrical adjustment of a flow control valve. The venturi meter can be used to measure flow, while the additional electronic sensors can measure parameters such as pressure and temperature. Thus, flow monitoring relies on the venturi meter and other electronic sensors.

The system and method described in the application can improve the reliability of flow monitoring by replacing the venturi meter and electronic sensors with the first and second fiber optic cables 20, 22, thereby eliminating the need for the venturi meter and other electronic meters. This simplifies the system, and makes it more reliable.

Although the technology described in the application has been described with reference to particular embodiments, it is to be understood that these embodiments are merely illustrative of the principles and applications of the present technology. For example, although the embodiments have been described as relates to use of the present technology in monitoring flow in production tubing, the technology can also be used to monitor flow in other applications, such as injection tubing. In addition, the embodiments shown and described above involve use of the technology in a mother bore of a well. The technology could also be applied, however, to lateral bores. For example, a fiber optical wet connect could be used to tie back the fiber optic ion on the lateral to the mother bore and to the surface.

## Claims

1. A system for measuring conditions in a wellbore (10), the system comprising:
tubing (12) extending into the wellbore;
a first fiber optic cable (20) extending axially along a first surface portion (23a) of the tubing and having multiple signal generation gauges (24) for producing a generated acoustic signal (26) by tapping out a light of a predetermined wavelength of the first fiber optic cable, each of the plurality of signal generation gauges located at a predetermined location along the first fiber optic cable, said generated acoustic signal propagating outward from the signal generation gauge and through the tubing; and
a second fiber optic cable (22) extending axially along a second surface portion (23b) of the tubing and operable to receive a resulting signal of the generated acoustic signal (26) so that wellbore parameters proximate to the predetermined location can be determined, the second fiber optic cable being spaced apart from the first fiber optic cable and being operable to transmit data of the resulting signal (27) to a receiver (30).

2. The system of claim 1, wherein the first fiber optic cable (20) and the second fiber optic cable (22) extend substantially parallel to one another and wherein the second surface portion (23b) of the tubing (12) is on an opposite side of the tubing from the first surface portion (23a) of the tubing.

3. The system of claim 1 or claim 2, wherein the generated acoustic signal (26) has a frequency of between about 1mHz and about 100 kHz, and a dynamic range of about 120dB or more.

4. The system of any of claims 1-3, further comprising a penetrator circumscribing the first fiber optic cable and located within an annular packer (14) between the tubing and the wellbore, the penetrator (23) sealing between the first fiber optic cable (20) and the annular packer.

5. The system of any of claims 1-4, wherein the second fiber optic cable (22):
(i) has at least one signal detection point (28) located at a discrete location along the second fiber optic cable; or
(ii) is operable to receive the generated acoustic signal (26) along a distributed length (L) of the second fiber optic cable.

6. The system of any of claims 1-5, wherein the second fiber optic cable (22) is operable to receive an amplitude and a phase of the resulting signal (27).

7. The system of any of claims 1-6, wherein the wellbore parameters are selected from a group consisting of pressure, temperature, phase fraction, and fluid flow rate.

8. A system for measuring conditions in a wellbore (10), the system comprising:
tubing (12) extending into the wellbore;
a first fiber optic cable (20) extending axially along the tubing and having multiple signal generation gauges (24) for producing a generated acoustic signal (26) by tapping out a light of a predetermined wavelength of the first fiber optic cable, said generated acoustic signal propagating outward from each of the multiple signal generation gauges, each of the multiple signal generation gauges located at a predetermined location along the first fiber optic cable;
a second fiber optic cable (22) extending axially along an opposite side of the tubing from the first fiber optic cable and operable to receive a resulting signal (27) of the generated acoustic signal after the generated acoustic signal passes through the tubing, wherein the first fiber optic cable and the second fiber optic cable are separate fiber optic cables and are spaced apart from each other; and
a receiver (30) in communication with the second fiber optic cable and operable to receive data of the resulting signal, the data including at least one of an amplitude and a phase of the resulting signal.

9. The system of claim 8, wherein the receiver (30) is operable to determine at least one of a pressure, temperature, phase fraction, and fluid flow rate within the wellbore (10) from the data of the resulting signal (27).

10. The system of claim 8 or claim 9, wherein:
(i) the first fiber optic cable (20) and the second fiber optic cable (22) are secured to a surface of the tubing (12); and/or
(ii) the second fiber optic cable has a distributed length (L) and is operable to receive the resulting signal (27) along the distributed length.

11. A method for measuring conditions in a wellbore (10), the method comprising:
extending tubing (12) into the wellbore, the tubing having a first fiber optic cable (20) extending axially along a first surface portion (23a) of the tubing and a second fiber optic cable (22) extending axially along a second surface portion (23b) of the tubing, the second fiber optic cable being a separate cable spaced apart from the first fiber optic cable;
generating a generated acoustic signal (26) with multiple signal generation gauges (24) that produce a generated acoustic signal by tapping out a light of a predetermined wavelength of the first fiber optic cable, each of the multiple signal generation gauges located at a predetermined location along the first fiber optic cable, the generated acoustic signal propagating outward from the at least one signal generation gauge and through the tubing;
receiving a resulting signal (27) of the generated acoustic signal with the second fiber optic cable so that wellbore parameters proximate to the predetermined location can be determined; and
transmitting data of the resulting signal to a receiver (30) with the second fiber optic cable.

12. The method of claim 11, wherein generating the generated acoustic signal (26) includes generating the generated acoustic signal with a frequency of between about 1mHz and about 100 kHz, and a dynamic range of about 120dB or more.

13. The method of claim 11 or claim 12, wherein:
(i) the second fiber optic cable (22) has at least one signal detection point (28) located at a discrete location along the second fiber optic cable and receiving the resulting signal (27) with the second fiber optic cable includes receiving the resulting signal with the at least one signal detection point; or
(ii) receiving resulting signal with the second fiber optic cable includes receiving the resulting signal along a distributed length (L) of the second fiber optic cable.

14. The method of any of claims 11-13, wherein transmitting the data of the resulting signal (27) to the receiver (30) with the second fiber optic cable (22) includes transmitting an amplitude and a phase of the resulting signal.

15. The method of any of claims 11-14, further comprising determining at least one of a pressure, temperature, phase fraction, and fluid flow rate within the wellbore (10) from the data of the resulting signal (27).

## Patentansprüche

1. System zum Messen der Bedingungen innerhalb eines Bohrlochs (10), wobei das System umfasst:
eine Rohrleitung (12), welche sich in das Bohrloch erstreckt;
ein erstes optisches Faserkabel (20), welches sich axial entlang eines ersten Oberflächenabschnitts (23a) der Rohrleitung erstreckt und mehrere Signalerzeugungsmessgeräte (24) zum Erzeugen eines erzeugten akustischen Signals (26) aufweist, indem ein Licht mit einer vorbestimmten Wellenlänge aus dem ersten optischen Faserkabel gezapft wird, wobei jedes der Mehrzahl von Signalerzeugungsmessgeräten an einer vorbestimmten Position entlang des ersten optischen Faserkabels angeordnet ist, wobei das erzeugte akustische Signal sich nach außen von dem Signalerzeugungsmessgerät und durch die Rohrleitung ausbreitet; und
ein zweites optisches Faserkabel (22), welches sich axial entlang eines zweiten Oberflächenabschnitts (23b) der Rohrleitung erstreckt und betreibbar ist, um ein resultierendes Signal des erzeugten akustischen Signals (26) zu empfangen, sodass Bohrlochparameter in der Nähe der vorbestimmten Position bestimmbar sind, wobei das zweite optische Faserkabel von dem ersten optischen Faserkabel beabstandet ist und betreibbar ist, um Daten des resultierenden Signals (27) an einen Empfänger (30) zu übertragen.

2. System nach Anspruch 1, wobei das erste optisches Faserkabel (20) und das zweite optische Faserkabel (22) sich im Wesentlichen parallel zueinander erstrecken und wobei der zweite Oberflächenabschnitt (23b) der Rohrleitung (12) auf einer gegenüberliegenden Rohrleitungsseite im Verhältnis zu dem ersten Oberflächenabschnitt (23a) der Rohrleitung liegt.

3. System nach Anspruch 1 oder Anspruch 2, wobei das erzeugte akustische Signal (26) eine Frequenz zwischen etwa 1 mHz und etwa 100 kHz und einen dynamischen Bereich von etwa 120 dB oder mehr aufweist.

4. System nach einem der Ansprüche 1-3, ferner umfassend einen Penetrator, welcher das erste optische Faserkabel umschließt und innerhalb eines ringförmigen Packers (14) zwischen der Rohrleitung und dem Bohrloch liegt, wobei der Penetrator (23) zwischen dem ersten optischen Faserkabel (20) und dem ringförmigen Packer abdichtet.

5. System nach einem der Ansprüche 1-4, wobei das zweite optische Faserkabel (22):
(i) mindestens einen Signalerfassungspunkt (28) aufweist, welcher an einer diskreten Position entlang des zweiten optischen Faserkabels liegt; oder
(ii) betreibbar ist, um das erzeugte akustische Signal (26) entlang einer verteilten Länge (L) des zweiten optischen Faserkabels zu empfangen.

6. System nach einem der Ansprüche 1-5, wobei das zweite optische Faserkabel (22) betreibbar ist, um eine Amplitude und eine Phase des resultierenden Signals (27) zu empfangen.

7. System nach einem der Ansprüche 1-6, wobei die Bohrlochparameter aus einer Gruppe ausgewählt sind, bestehend aus Druck, Temperatur, Phasenfraktion, und Fluiddurchsatz.

8. System zum Messen der Bedingungen in einem Bohrloch (10), wobei das System umfasst:
eine Rohrleitung (12), welche sich in das Bohrloch erstreckt;
ein erstes optisches Faserkabel (20), welches sich axial entlang der Rohrleitung erstreckt und mehrere Signalerzeugungsmessgeräte (24) zum Erzeugen eines erzeugten akustischen Signals (26) aufweist, indem ein Licht mit einer vorbestimmten Wellenlänge aus dem ersten optischen Faserkabel gezapft wird, wobei das erzeugte akustische Signal sich nach außen von jedem der mehreren Signalerzeugungsmessgeräte ausbreitet, wobei jedes der mehreren Signalerzeugungsmessgeräte an einer vorbestimmten Position entlang des ersten optischen Faserkabels liegt;
ein zweites optisches Faserkabel (22), welches sich axial entlang einer gegenüberliegenden Seite der Rohrleitung von dem ersten optischen Faserkabel erstreckt und betreibbar ist, um ein resultierendes Signal (27) des erzeugten akustischen Signals zu empfangen, nachdem das erzeugte akustische Signal die Rohrleitung durchquert hat, wobei das erste optische Faserkabel und das zweite optische Faserkabel getrennte optische Faserkabel sind und voneinander beabstandet sind; und
einen Empfänger (30), welcher mit dem zweiten optischen Faserkabel kommuniziert und betreibbar ist, um Daten des resultierenden Signals zu empfangen, wobei die Daten mindestens eine von einer Amplitude und einer Phase des resultierenden Signals umfassen.

9. System nach Anspruch 8, wobei der Empfänger (30) betreibbar ist, um mindestens eines von Druck, Temperatur, Phasenfraktion und Fluiddurchsatz innerhalb des Bohrlochs (10) aus den Daten des resultierenden Signals (27) zu bestimmen.

10. System nach Anspruch 8 oder Anspruch 9, wobei:
(i) das erste optische Faserkabel (20) und das zweite optische Faserkabel (22) an einer Oberfläche der Rohrleitung (12) befestigt sind; und/oder
(ii) das zweite optische Faserkabel eine verteilte Länge (L) aufweist und betreibbar ist, um das resultierende Signal (27) entlang der verteilten Länge zu empfangen.

11. Verfahren zum Messen der Bedingungen innerhalb eines Bohrlochs (10), wobei das Verfahren umfasst:
Auslegen einer Rohrleitung (12) in das Bohrloch, wobei die Rohrleitung ein erstes optisches Faserkabel (20), welches sich axial entlang eines ersten Oberflächenabschnitts (23a) der Rohrleitung erstreckt, und ein zweites optisches Faserkabel (22) aufweist, welches sich axial entlang eines zweiten Oberflächenabschnitts (23b) der Rohrleitung erstreckt, wobei das zweite optische Faserkabel ein vom ersten optischen Faserkabel getrennte und beabstandete Kabel ist;
Erzeugen eines erzeugten akustischen Signals (26) mit mehreren Signalerzeugungsmessgeräten (24), welche ein erzeugtes akustisches Signal erzeugen, indem Licht mit einer vorbestimmten Wellenlänge aus dem ersten optischen Faserkabel gezapft wird, wobei jedes der mehreren Signalerzeugungsmessgeräte an einer vorbestimmten Position entlang des ersten optischen Faserkabels liegt, wobei das erzeugte akustische Signal sich nach außen von dem mindestens einen Signalerzeugungsmessgerät und durch die Rohrleitung ausbreitet;
Empfangen eines resultierenden Signals (27) des erzeugten akustischen Signals mit dem zweiten optischen Faserkabel, sodass Bohrlochparameter in der Nähe der vorbestimmten Position bestimmbar sind; und
Übertragen von Daten des resultierenden Signals an einen Empfänger (30) mit dem zweiten optischen Faserkabel.

12. Verfahren nach Anspruch 11, wobei das Erzeugen des erzeugten akustischen Signals (26) das Erzeugen des erzeugten akustischen Signals mit einer Frequenz zwischen etwa 1 mHz und etwa 100 kHz und mit einem dynamischen Bereich von etwa 120 dB oder mehr umfasst.

13. Verfahren nach Anspruch 11 oder Anspruch 12, wobei:
(i) das zweite optische Faserkabel (22) mindestens einen Signalerfassungspunkt (28) aufweist, welcher an einer diskreten Position entlang des zweiten optischen Faserkabels liegt und wobei das Empfangen des resultierenden Signals (27) mit dem zweiten optischen Faserkabel das Empfangen des resultierenden Signals mit dem mindestens einen Signalerfassungspunkt umfasst; oder
(ii) das Empfangen des resultierenden Signals mit dem zweiten optischen Faserkabel das Empfangen des resultierenden Signals entlang einer verteilten Länge (L) des zweiten optischen Faserkabels umfasst.

14. Verfahren nach einem der Ansprüche 11-13, wobei das Übertragen der Daten des resultierenden Signals (27) an den Empfänger (30) mit dem zweiten optischen Faserkabel (22) das Übertragen einer Amplitude und einer Phase des resultierenden Signals umfasst.

15. Verfahren nach einem der Ansprüche 11-14, ferner umfassend das Bestimmen mindestens eines von Druck, Temperatur, Phasenfraktion und Fluiddurchsatz innerhalb des Bohrlochs (10) aus den Daten des resultierenden Signals (27).

## Revendications

1. Système de mesure de conditions dans un puits de forage (10), le système comprenant :
un tubage (12) s'étendant dans le puits de forage ;
un premier câble à fibre optique (20) s'étendant axialement le long d'une première partie de surface (23a) du tubage et comportant de multiples jauges de génération de signal (24) pour produire un signal acoustique généré (26) en prélevant une lumière avec une longueur d'onde prédéterminée du premier câble à fibre optique, chacune de la pluralité de jauges de génération de signal étant située à un emplacement prédéterminé le long du premier câble à fibre optique, ledit signal acoustique généré se propageant vers l'extérieur à partir de la jauge de génération de signal et à travers le tubage ; et
un second câble à fibre optique (22) s'étendant axialement le long d'une seconde partie de surface (23b) du tubage et conçu pour recevoir un signal résultant du signal acoustique généré (26) de sorte que des paramètres du puits de forage à proximité de l'emplacement prédéterminé puissent être déterminés, le second câble à fibre optique étant espacé par rapport au premier câble à fibre optique et étant conçu pour transmettre des données du signal résultant (27) à un récepteur (30).

2. Système selon la revendication 1, dans lequel le premier câble à fibre optique (20) et le second câble à fibre optique (22) s'étendent de façon sensiblement parallèle l'un à l'autre et dans lequel la seconde partie de surface (23b) du tubage (12) se trouve sur un côté opposé du tubage par rapport à la première partie de surface (23a) du tubage.

3. Système selon la revendication 1 ou la revendication 2, dans lequel le signal acoustique généré (26) a une fréquence comprise entre environ 1 mHz et environ 100 kHz, et une plage dynamique d'environ 120 dB ou plus.

4. Système selon l'une quelconque des revendications 1 à 3, comprenant en outre un pénétrateur circonscrivant le premier câble à fibre optique et situé à l'intérieur d'une garniture d'étanchéité annulaire (14) entre le tubage et le puits de forage, le pénétrateur (23) assurant l'étanchéité entre le premier câble à fibre optique (20) et la garniture d'étanchéité annulaire.

5. Système selon l'une quelconque des revendications 1 à 4, dans lequel le second câble à fibre optique (22) :
(i) comporte au moins un point de détection de signal (28) situé à un emplacement distinct le long du second câble à fibre optique ; ou
(ii) est conçu pour recevoir le signal acoustique généré (26) le long d'une longueur distribuée (L) du second câble à fibre optique.

6. Système selon l'une quelconque des revendications 1 à 5, dans lequel le second câble à fibre optique (22) est conçu pour recevoir une amplitude et une phase du signal résultant (27).

7. Système selon l'une quelconque des revendications 1 à 6, dans lequel les paramètres du puits de forage sont choisis dans un groupe constitué d'une pression, d'une température, d'une fraction de phase et d'un débit de fluide.

8. Système de mesure de conditions dans un puits de forage (10), le système comprenant :
un tubage (12) s'étendant dans le puits de forage ;
un premier câble à fibre optique (20) s'étendant axialement le long du tubage et comportant de multiples jauges de génération de signal (24) pour produire un signal acoustique généré (26) en prélevant une lumière avec une longueur d'onde prédéterminée du premier câble à fibre optique, ledit signal acoustique généré se propageant vers l'extérieur à partir de chacune des multiples jauges de génération de signal, chacune des multiples jauges de génération de signal étant située à un emplacement prédéterminé le long du premier câble à fibre optique ;
un second câble à fibre optique (22) s'étendant axialement le long d'un côté opposé du tubage par rapport au premier câble à fibre optique et conçu pour recevoir un signal résultant (27) du signal acoustique généré après que le signal acoustique généré est passé à travers le tubage, dans lequel le premier câble à fibre optique et le second câble à fibre optique sont des câbles à fibre optique séparés et sont espacés l'un par rapport à l'autre ; et
un récepteur (30) en communication avec le second câble à fibre optique et conçu pour recevoir des données du signal résultant, les données comprenant au moins l'une parmi une amplitude et une phase du signal résultant.

9. Système selon la revendication 8, dans lequel le récepteur (30) est conçu pour déterminer au moins l'un parmi une pression, une température, une fraction de phase et un débit de fluide à l'intérieur du puits de forage (10) à partir des données du signal résultant (27).

10. Système selon la revendication 8 ou la revendication 9, dans lequel :
(i) le premier câble à fibre optique (20) et le second câble à fibre optique (22) sont fixés à une surface du tubage (12) ; et/ou
(ii) le second câble à fibre optique a une longueur distribuée (L) et est conçu pour recevoir le signal résultant (27) le long de la longueur distribuée.

11. Procédé de mesure de conditions dans un puits de forage (10), le procédé comprenant :
l'introduction d'un tubage (12) en extension dans le puits de forage, le tubage comportant un premier câble à fibre optique (20) s'étendant axialement le long d'une première partie de surface (23a) du tubage et un second câble à fibre optique (22) s'étendant axialement le long d'une seconde partie de surface (23b) du tubage, le second câble à fibre optique étant un câble séparé espacé par rapport au premier câble à fibre optique ;
la génération d'un signal acoustique généré (26) avec de multiples gauges de génération de signal (24) qui produisent un signal acoustique généré en prélevant une lumière avec une longueur d'onde prédéterminée du premier câble à fibre optique, chacune des multiples jauges de génération de signal étant située à un emplacement prédéterminé le long du premier câble à fibre optique, le signal acoustique généré se propageant vers l'extérieur à partir de l'au moins une jauge de génération de signal et à travers le tubage ;
la réception d'un signal résultant (27) du signal acoustique généré avec le second câble à fibre optique de sorte que des paramètres du puits de forage à proximité de l'emplacement prédéterminé puissent être déterminés ; et
la transmission de données du signal résultant à un récepteur (30) avec le second câble à fibre optique.

12. Procédé selon la revendication 11, dans lequel la génération du signal acoustique généré (26) comprend la génération du signal acoustique généré avec une fréquence comprise entre environ 1 mHz et environ 100 kHz, et une plage dynamique d'environ 120 dB ou plus.

13. Système selon la revendication 11 ou la revendication 12, dans lequel :
i) le second câble à fibre optique (22) comporte au moins un point de détection de signal (28) situé à un emplacement distinct le long du second câble à fibre optique et la réception du signal résultant (27) avec le second câble à fibre optique comprend la réception du signal résultant avec l'au moins un point de détection de signal ; ou
ii) la réception du signal résultant avec le second câble à fibre optique comprend la réception du signal résultant le long d'une longueur distribuée (L) du second câble à fibre optique.

14. Procédé selon l'une quelconque des revendications 11 à 13, dans lequel la transmission des données du signal résultant (27) au récepteur (30) avec le second câble à fibre optique (22) comprend la transmission d'une amplitude et d'une phase du signal résultant.

15. Procédé selon l'une quelconque des revendications 11 à 14, comprenant en outre la détermination d'au moins l'un parmi une pression, une température, une fraction de phase et un débit de fluide à l'intérieur du puits de forage (10) à partir des données du signal résultant (27).
